(19) Europäisches Patentamt
European Patent Office
Office européen des brevets

(11) **EP 0 642 210 B1**

(12) **EUROPEAN PATENT SPECIFICATION**

(45) Date of publication and mention
of the grant of the patent:
**08.10.1997 Bulletin 1997/41**

(21) Application number: **94910041.6**

(22) Date of filing: **18.03.1994**

(51) Int Cl.⁶: **H02K 29/00**, H02K 1/27

(86) International application number:
**PCT/JP94/00440**

(87) International publication number:
**WO 94/22206 (29.09.1994 Gazette 1994/22)**

(54) **ULTRA-HIGH SPEED BRUSHLESS DC MOTOR**

BÜRSTENLOSER MOTOR ULTRAHOHER GESCHWINDIGKEIT

MOTEUR A COURANT CONTINU SANS BALAIS A TRES HAUTE VITESSE

(84) Designated Contracting States:
**AT BE CH DE DK ES FR GB GR IE IT LI LU MC NL PT SE**

(30) Priority: **19.03.1993 JP 60726/93**
**30.09.1993 JP 244975/93**

(43) Date of publication of application:
**08.03.1995 Bulletin 1995/10**

(73) Proprietors:
• **DAIKIN INDUSTRIES, LTD.**
**Kita-ku, Osaka 530 (JP)**
• **Takahashi, Isao**
**Nagaoka-shi Niigata (JP)**

(72) Inventors:
• **TAKAHASHI, Isao**
**Niigata 940-21 (JP)**
• **OOYAMA, Kazunobu**
**Shiga 525 (JP)**
• **YAMAGIWA, Akio**
**Osaka 569 (JP)**

(74) Representative: **Prüfer, Lutz H., Dipl.-Phys. et al**
**Harthauser Strasse 25d**
**81545 München (DE)**

(56) References cited:
**EP-A- 0 583 994**     **JP-A- 1 209 942**
**JP-A- 2 023 049**     **JP-A- 2 119 546**
**JP-A- 2 276 431**     **JP-A- 3 159 533**
**JP-A-58 046 859**     **JP-U-55 120 285**
**JP-U-63 143 055**

## Description

Technical Field

The present invention relates to a super high speed brushless DC motor, and more particularly, relates to a super high speed brushless DC motor which includes an armature which is constructed by winding an armature winding to an armature core, and a rotor constructed by providing a rotor core having interior faces consisting of permanent magnets, which rotor rotates at greater than 10,000 r.p.m..

Background Art

Traditionally, a motor can be used as a driving source for a compressor, or the like, due to advantages such as ease of electrical control. A motor includes various species, but a three-phase induction motor is most commonly used in the applications presently contemplated because of advantages such as a rotating magnetic field's being easily obtained using three-phase alternating power source, thus making commutators unnecessary, and that a three-phase induction motor is steady, inexpensive, and is easy to deal with. In an induction motor, an armature winding is wound to an armature core and a rotor winding is wound to a rotor core. Current flows not only in the armature winding, but also in the rotor winding. Therefore, output can decrease due to secondary copper loss caused by current flowing in the rotor winding and efficiency of the induction motor cannot be significantly raised even when no mechanical losses exist.

In view of this consideration, a brushless DC motor is proposed in which permanent magnets are mounted to a rotor core rather than winding a rotor winding to the rotor core, so as to minimize secondary copper losses while providing high driving efficiency. Further, it is contemplated that a brushless DC motor is to be applied as a high speed motor in a precision machine, compressor or the like, because a brushless DC motor can perform with high driving efficiency. In the present case, a brushless DC motor is contemplated with a focus toward raising driving efficiency. An air gap length between a stator and a core is designed to be about 1/100 ~ 1/200 of an inside diameter of the stator so as to raise coupling efficiency of magnetic flux between the stator and the rotor. Further, a metallic tube is provided so as to prevent breakage of permanent magnets during high speed rotation (refer to an Official Gazzett of Tokukaihei 3-11950).

When a brushless DC motor is rotated at high speed, a variation in magnetic flux density ocurrs caused by slots in the stator. Although the gap length is extremely small as described above, the rotor is greatly influenced by the variation of the magnetic flux density so that an eddy current is generated. Driving efficiency of a brushless DC motor is lowered caused by the eddy current. Previously, it was thought that the driving efficiency of a brushless DC motor could be sufficiently raised by reducing an air gap length between a stator and a rotor so as to raise flux linkages efficiency, even when an eddy current is generated caused by variation in magnetic flux density. Brushless DC motors having high efficiency are typically designed with a minimal gap length.

More specifically, most conventional brushless DC motors are brushless and are rotated in a comparatively low output region, therefore calorific value caused by eddy current loss has minimal impact, hence, raising magnetic flux coupling efficiency is a main point instead. Consequently, gap length is to be minimized. Further, when a brushless DC motor is designed to be a high output brushless DC motor and/or a high speed rotating brushless DC motor, exothermic response caused by eddy current loss becomes a problem, In response, heat radiating measures having effect greater than exothermic heating caused by eddy current loss are provided by providing small slot openings in a stator, and/or performing forced cooling by fan, or supplying a cooling medium or the like. When stator slots are designed to be small, a distance between teeth of a stator becomes small, and variation in magnetic flux density is minimized between tooth sections and opening sections of slots. Therefore spacial harmonic components are greatly reduced. It also is believed that eddy current loss is greatly reduced. Determining width of mouse of slot involves design limits because a stator winding most be housed within the slots. Therefore, the design limit becomes the limit for suppressing exothermic response caused by eddy current loss. When forced cooling is performed, the increase in heat radiation turns upon the peformance of a fan, species of refrigerant, a limit of flowing speed of the cooling medium, or the like. Consequently, designing a brushless DC motor for high output and/or a high speed rotating has limits.

The inventors of the present invention have earnestly pursued obtaining a brushless DC motor which can rotate at super high speed, and have analyzed high speed rotating motors which are presently available. As a result, the inventors have found that existing high speed rotating motors have limits in raising rotating speed, as is illustrated in Fig. 9, and have confirmed that a brushless DC motor has limits in raising its output and/or raising its rotating speed. In Fig. 9, the data points illustrate outputs and rotating speeds for conventionally constructed motors (or high speed motors). The inventors have found a cause of the limit is that generation of eddy current becomes remarkable following an increase in rotating speed, that efficiency decreases, and rotor temperature rises extremely due to eddy current loss.

Consequently, in the past, it was impossible to construct a super high speed motor which exceeds the solid line illustrated in Fig. 9.

Further, though a conventional brushless DC motor should be designed having a small air gap length, work accuracy, assembling accuracy for each constructing component must be raised accordingly. A disadvantage arises in that manufacturing such a brushless DC motor becomes extremely complicated.

Summary of The Invention

The present invention was made in view of the above-mentioned problems. It is an object of the present invention to supply a super high speed brushless DC motor which requires no special design considerations such as decreasing width of mouth of slot, or providing cooling apparatus.

To achieve the above-mentioned object, a super high speed brushless DC motor according to a first embodiment of the present invention provides an air gap length between a stator and a portion having metallic characteristics of a rotor to be equal to or greater than $N^{5/6} \cdot P^{1/8} \cdot d \cdot Kg$ {wherein d represents an inner diameter of the stator, N represents a rated speed (ten thousands r.p.m.), P represents a rated output (kW), and Kg represents a constant which is determined based upon the stator of the motor}.

A super high speed brushless DC motor according to a second embodiment defines an air gap length between a stator and a portion having metallic characteristics of a rotor to be equal to or greater than $(\gamma/0.3)^{1.95} \cdot N^{5/6} \cdot P^{1/8} \cdot d \cdot Kg$ {wherein $\gamma$ represents a ratio of an opening length of a slot with respect to a slot pitch of the stator, d represents an inner diameter of the stator, N represents a rated speed (ten thousands r.p.m.), P represents a rated output (kW), and Kg represents a constant which is determined based upon the stator of the motor}.

A super high speed brushless DC motor according to a third embodiment includes fins for naturally air-cooling, and determines the air gap length between the stator and the portion of the rotor having metallic characteristics to be $1/Ks^{1/2}$ multiplied to the above-mentioned air gap length.

A super high speed brushless DC motor according to a fourth embodiment determines the air gap length g to be less than $\pi D/(2p)$ (wherein D represents a diameter of a surface of magnets of the rotor).

A super high speed brushless DC motor according to the present invention may employ a rotor to which permanent magnets made of rare earth elements have been mounted.

A super high speed brushless DC motor according to the present invention may employ permanent magnets which are magnetized over an entire region in a direction parallel to a magnetic pole axis, as permanent magnets mounted to the rotor.

A super high speed brushless DC motor according to the present invention may employ a rotor to which a protection tube made of metal is mounted at an outermost portion.

A super high speed brushless DC motor according to the present invention may employ a rotor to which a protection tube made of insulating material is mounted at an outermost portion.

A super high speed brushless DC motor according to the present invention may employ a rotor to which a protection tube made of metal or insulating material is mounted at an outermost portion, the protection tube providing compressing force to the permanent magnets made of rare earth elements toward a central axis of the rotor.

A super high speed brushless DC motor according to the present invention may employ permanent magnets made of casting hot worked rare earth elements as the permanent magnets. The permanent magnets made of casting hot worked rare earth elements are preferable in which at least one species of rare earth elements which include yttrium, at least one species of transition metals, and at least one species of IIIb group elements are melted and cast as basic components, then are hot worked to equal to or greater than 500°C, so that magnetic phases are compressed and magnetic anisotropy is applied by mechanical orientation. More preferably, at least one species of rare earth elements selected from Pr, Nd, Dy, Ce, La, Y, Th, at least one species of transition metals selected from Fe, Co, Cu, Ag, Au, Ni, Zr, and at least one species of IIIb group elements selected from B, Ga, Al are exemplified, and it is preferable that their atomic percentages are 12-25 %, 65-85 % and 3-10 %.

As to the super high speed brushless DC motor according to the first embodiment of the present invention the air gap length between the stator and the portion having metallic characteristics of the rotor is determined to be equal to or greater than $N^{5/6} \cdot P^{1/8} \cdot d \cdot Kg$, which air gap length is greater then an air gap length of a conventional brushless DC motor. Consequently, when variation in magnetic flux density is caused by slots of the stator, variation in magnetic flux density in the rotor is greatly suppressed due to the air gap length being great, so that generation of eddy current in the rotor is significantly decreased. Therefore, driving efficiency is raised, heat generation in the rotor is greatly suppressed due to the air gap length being great, so that a stable, super high speed rotating can be performed. Further, the super high speed brushless DC motor requires no design consideration for redesigning the stator because of the enlarged air gap length. Furthermore, assembling of the super high speed brushless DC motor becomes simple because of the air gap length design.

As to the super high speed brushless DC motor according to the second embodiment, though the air gap length between the stator and the portion having metallic characteristics of the rotor is determined to be equal to or greater

than $(\gamma/0.3)^{1.95} \cdot N^{5/6} \cdot P^{1/8} \cdot d \cdot Kg$, the air gap length is designed to be greater then an air gap length of a conventional brushless DC motor when the brushless DC motor has a large diameter with respect to a wire diameter of a stator winding, for example. Consequently, even when variation in magnetic flux density is great, to some degree, caused by slots of the stator, variation in magnetic flux density in the rotor is suppressed due to the air gap length being great, so that generation of eddy current in the rotor is greatly decreased. Therefore, driving efficiency is raised, heat generation in the rotor is greatly reduced by the air gap length being great, so that stable, super high speed, rotating is capable. Further, the super high speed brushless DC motor of the present invention requires no redesigning of the stator because the design enlarges the air gap length. Furthermore, assembling of the super high speed brushless DC motor becomes easy because the air gap length is designed to be great.

As to the super high speed brushless DC motor according to the third embodiment, though the motor includes fins for naturally air-cooling, and determines the air gap length between the stator and the portion of the rotor having metallic characteristics to be $1/Ks^{1/2}$ multiplied to the above-mentioned air gap length, the air gap length is designed to be greater then an air gap length of a conventional brushless DC motor when the brushless DC motor has an extremely large diameter with respect to a wire diameter of a stator winding, for example. Consequently, even when variation in magnetic flux density is great, to some degree, caused by slots of the stator, variation in magnetic flux density in the rotor is suppressed due to the air gap length being great, so that generation of eddy current in the rotor is greatly decreased. Therefore, driving efficiency is raised, heat generation in the rotor is greatly suppressed due to the air gap length being great, so that stable, super high speed, rotating is possible. Further, the super high speed brushless DC motor of the present invention requires no redesigning of the stator because the motor merely enlarges the air gap length. Furthermore, assembling of the super high speed brushless DC motor becomes easy because the air gap length is designed to be great.

As to the super high speed brushless DC motor according to the fourth embodiment, though the air gap length g is determined to be less than $\pi D/(2p)$, super high speed rotation is performed.

As to the super high speed brushless DC motor having permanent magnets mounted to the rotor, magnetic force of the permanent magnets is strong (BH product is great) so that sufficient flux linkages efficiency is performed although the air gap length is large.

As to the super high speed brushless DC motor employing permanent magnets which are magnetized over an entire region in a direction parallel to the magnetic pole axis, as permanent magnets mounted to the rotor, magnetic flux density in the air gap between the stator and the rotor is varied according to a sine function so that the magnetic flux density avoids inclusion of higher harmonic components. Therefore, iron loss in the stator caused by the higher harmonic components is nearly reduced to zero so that the driving efficiency is raised.

As to the super high speed brushless DC motor employing a rotor to which a protection tube made of metal is mounted at an outermost portion, the thickness of the protection tube can be designed to be great in comparison with the conventional brushless DC motor so that the permanent magnets are protected even when the motor rotates at super high speed. Consequently, stable super high speed rotation is provided.

As to the super high speed brushless DC motor employing a rotor to which a protection tube made of insulating material is mounted at an outermost portion, no eddy current is generated in the protection tube. Therefore, driving efficiency is increased due to the lack of eddy current in the protection tube.

As to the super high speed brushless DC motor which employs a rotor to which a protection tube made of metal or insulating material is mounted at an outermost portion, wherein the protection tube gives compressing force to the permanent magnets made of rare earth elements toward a central axis of the rotor, permanent magnets protection effect which is greater is performed so that higher super high speed rotation is further provided. The thickness of the protection tube can be designed to be significant in view of the air gap length considerations thus giving high compression effect to the permanent magnets.

As to the super high speed brushless DC motor which employs permanent magnets made of casting hot worked rare earth elements as the permanent magnets, strength of the permanent magnets is greater than that of sintered rare earth elements magnets, providing optional omission of the protection tube. Of course, if the protection tube is provided, an upper limit of the rotating speed can be raised. Further, casting hot worked rare earth elements permanent magnets have characteristics which are similar to these of metal, so that working with high accuracy is possible and density is uniform within the permanent magnet. Therefore, balancing of the rotor having the permanent magnets mounted thereto is easily performed. When a protection tube is employed, stress within the permanent magnet is decreased, good overall balance is maintained, and manufacturing and assembling are simplified. When the brushless DC motor which employs a rotor having a protection tube made of metal, the permanent magnets made of rare earth elements are positioned at the outermost position of the rotor so that flux linkages efficiency is improved.

More particularly, the inventors of the present invention have earnestly pursued providing a brushless DC motor which provides an output which exceeds a limit output of a conventional brushless DC motor, and performs at a revolution which exceeds a limit revolution of a conventional brushless DC motor. The inventors have found that shortening the air gap length as much possible between a stator and a rotor for raising flux linkages efficiency impedes super high speed rotation. That is, when a brushless motor is driven at super high speed rotation, a frequency of magnet flux density caused by slots of a stator becomes high, significant eddy current flows within a rotor caused by the magnetic flux density so that driving efficiency is greatly reduced. Further, heat generation in the rotor is great as caused by eddy current loss becoming great, and efficiency for radiating heat cannot be improved because of the air gap length being so short that the temperature of the rotor increases so that permanent magnets lose their magnetic force and that a rotor itself can melt.

The inventors have pursued lengthening an air gap length of a super high speed brushless DC motor to some degree, and have found that when the air gap length between a stator and a rotor is determined based upon a rated revolution and a rated output and is determined to be equal or greater than $N^{5/6} \cdot P^{1/8} \cdot d \cdot Kg$, for example, a great decrease in eddy current is achieved, and that the heat generation caused by the decreased eddy current is not significant because heat radiating efficiency is sufficient to overcome heat generation. The inventors complete the present invention based upon the following findings:

We describe the formula of $N^{5/6} \cdot P^{1/8} \cdot d \cdot Kg$ regulating the air gap length.

Amplitude of space harmonics within an air gap caused by slots of a stator can be represented by a difference between an average value of magnetic flux density within the air gap when the stator has no slots and an average value of magnetic flux density within the air gap when the stator has slots.

The average value Bg of magnetic flux density within the air gap when the stator has no slots is represented by the following formula:

$$Bg = Br \cdot C\phi/(1 + Pm/Po).$$

Wherein Pm represents permeance of a magnet, Po represents permeance of an air gap, $C\phi$ represents a ratio of a magnet-air gap surface areas, Br represents a remanent magnetic flux density of a magnet.

The average value Bgs of magnetic flux density within the air gap when the stator has slots is represented by the following formula:

$$Bgs = Br \cdot C\phi/(1 + Pm/Ps).$$

Wherein Ps represents permeance when a stator has slots.

The permeance Ps is represented by the following formula:

$$Ps = \mu 0\{w/g - (4/\pi) \log(1 + \pi s/4g)\}.$$

Wherein w represents a width of a tooth of a stator, g represents an air gap length between a stator and a rotor. When an approximate expression of Carter's coefficient is introduced to the formula representing the permeance Ps, the following formulae are obtained:

$$Ps = \mu 0 \cdot Ag/k \cdot g;$$

$$k = t/[t - \{(s/g)^2/(5 + s/g)\} \cdot g].$$

Wherein Ag represents an air gap surface area, t represents a slot pitch, s represents a length of mouth of slot.

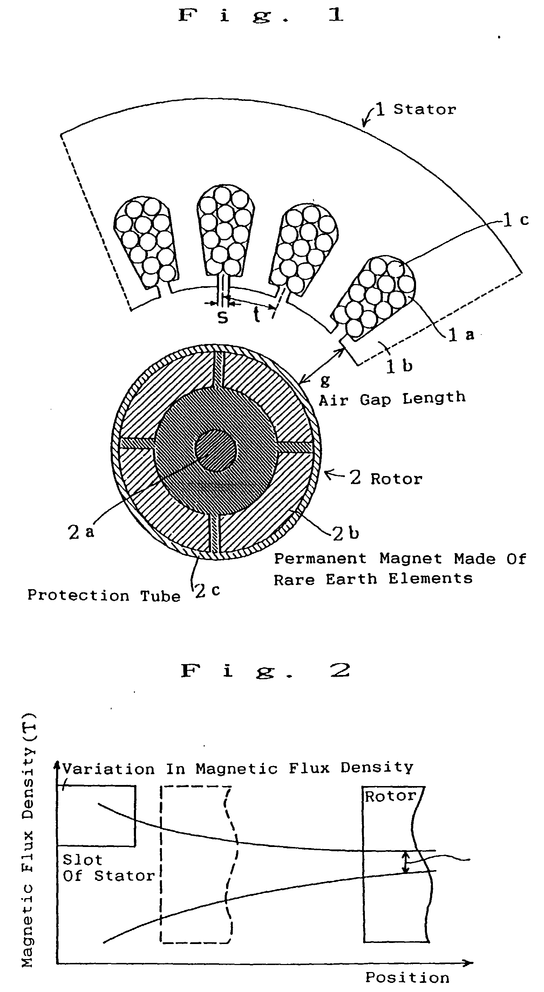

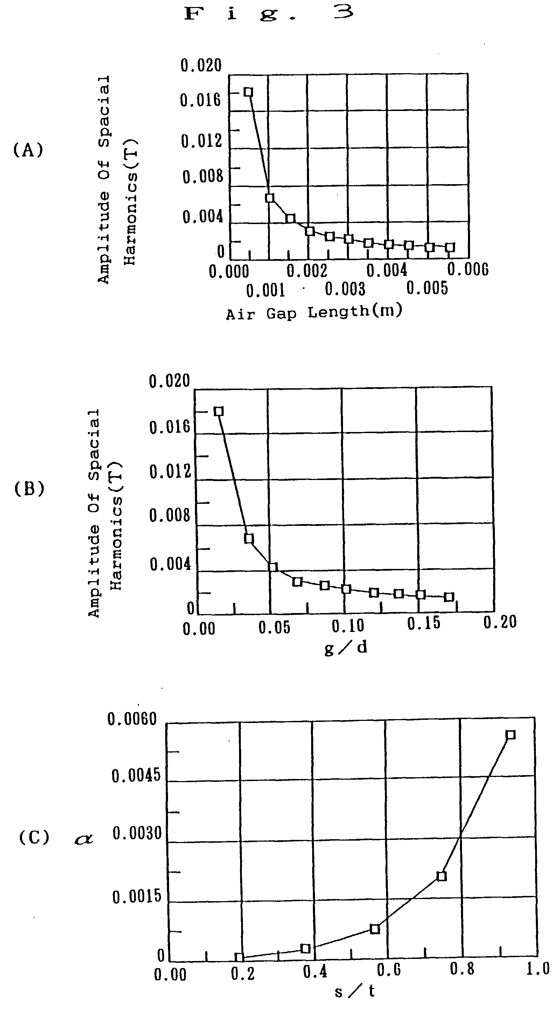

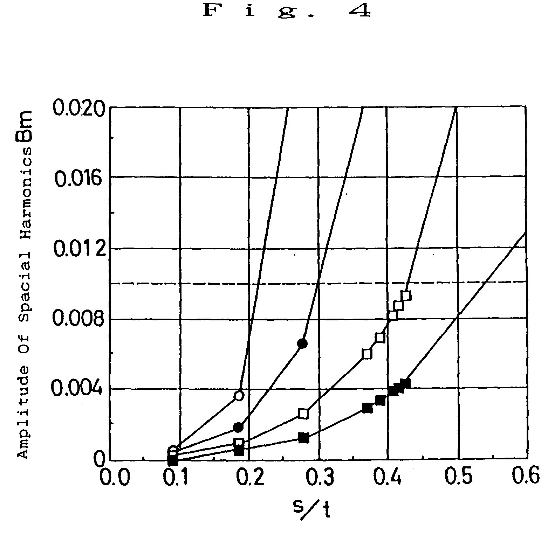

Therefore, the amplitude of space harmonics Bm becomes Bm = IBg - BgsI {refer to Fig. 3(A)}, and when Bm is made non-dimensionalized using g/d (wherein d represents an inner diameter of a stator), Bm is illustrated in Fig. 3(B).

Further, when Bm is expressed with a function of g/d, the following formula is obtained:

$$Bm = \alpha/(g/d).$$

Wherein $\alpha$ represents a constant determined based upon a length of mouth of slot. Therefore, the relationship between $\alpha$ and s/t is illustrated in Fig. 3(C), and the relationship is approximated to $\alpha = \beta(s/t)^{1.95}$ (wherein $\beta = 0.0069 \sim 0.0071$). Consequently, the above-mentioned amplitude Bm becomes $Bm = \beta(s/t)^{1.95}/(g/d)$.

Next, metallic tube loss W1 is represented by the following formula.

$$W1 \propto Bm^2$$

Therefore, in g/d, the metallic tube loss W1 becomes $W1 \propto 1/(g/d)^2$ so that the metallic tube loss W1 is in inverse proportion to the second power of a ratio of an air gap length to an inner diameter of a stator.

But, in an actual brushless DC motor, variation in loss generation degree should be taken into consideration, because the loss generation degree varies caused by variation in motor shape following variation in number of rotation and variation in output. This point is described in detail in the following.

When it is assumed that an output of a motor is P (kw), a rotating speed is N (ten thousands r.p.m.), a diameter of a rotor is D (m), a length of the rotor in an axis direction is L (m), output coefficients are K, K1, K2, output equations of the motor are given as follows:

$$P = K \cdot D^2 \cdot L \cdot N;$$

$$P = K1 \cdot D^3 \cdot L \cdot N;$$

$$P = K2 \cdot D^{8/3} \cdot L^{4/3} \cdot N.$$

When it is assumed that D and L varies at the same ratio $\alpha$, the above three equations are simplified as follows:

$$P = \alpha^3 \cdot N;$$

$$P = \alpha^4 \cdot N.$$

Therefore, when a motor having the same output is varied its rotating speed to kN times, it is understood that sizes of each section generally varies within an extent of $\alpha = kN^{-1/3} \sim kN^{-1/4}$ times.

Further, when a motor having the same rotating speed is varied its output to kP times, it is understood that $\alpha = kP^{-1/3} \sim kP^{-1/4}$ times similarly.

<determining an air gap when a rotating speed becomes kN times>

As is described above, when a motor having the same output is varied its rotating speed to kN times, a becomes $\alpha = kN^{-1/3} \sim kN^{-1/4}$ times. In this case, a volume of heat generating section of a rotor caused by eddy current becomes $\alpha^3$ as is similar as that of a motor volume. But, eddy current loss per unit volume becomes $kN^2$ times because a frequency of the eddy current becomes kN times. Therefore, an increase of heat generation quantity of a rotor becomes as follows.

$$\alpha^3 \cdot kN^2 = kN^{-1} \cdot kN^2 \sim kN^{-3/4} \cdot kN^2$$

$$= kN \sim kN^{5/4} \text{ times.}$$

On the other hand, though a heat radiating area of a rotor becomes $\alpha^2$ times, the inventors have found that an air gap should be enlarged so as to reduce heat generation quantity caused by eddy current so that a temperature of the rotor is prevented from rising. Heat generation quantity/heat radiating area =

$$kt \cdot kN \cdot kN^{2/3} \sim kt \cdot kN^{5/4} \cdot kN^{2/4}$$

$$= kt \cdot kN^{5/3} \sim kt \cdot kN^{7/4} = \text{constant}$$

Further, when temperature rise becomes an issue, size of a motor is generally enlarged. A ratio for decreasing loss by an air gap is determined to be $kN^{5/3}$ by taking the enlargment in size into consideration. A relationship between an air gap length g and a loss W1 is expressed by the following formula:

$$g/d \propto W1^{-1/2}$$

Therefore, loss W1' when the rotating speed is varied to kN times should be determined by the following formula.

$$W1' = W1/kN^{5/3}$$

Consequently, the air gap length g should be increased by a ratio of $g/d = (1/kN^{5/3})^{-1/2} = kN^{5/6}$.

<determining an air gap when an output becomes kP times>

As is apparent from the above formulae, when a motor having the same rotating speed has varied its output to kP times, $\alpha$ becomes $\alpha = kP^{1/3} \sim kP^{1/4}$ times. In this case, a volume of heat generating section of a rotor caused by eddy current becomes $\alpha^3$ as is similar as that of a motor volume. Therefore, an increase of heat generation quantity of a rotor becomes as follows.

$$\alpha^3 = kP \sim kP^{3/4} \text{ times.}$$

On the other hand, though a heat radiating area of a rotor becomes $\alpha^2$ times, the inventors have found that an air gap should be enlarged so as to reduce heat generation quantity caused by eddy current so that a temperature of the rotor is prevented from rising.

Heat generation quantity/heat radiating area =

$$kt \cdot kP \cdot kP^{-2/3} \sim kt \cdot kP^{3/4} \cdot kP^{-2/4}$$

$$= kt \cdot kP^{1/3} \sim kt \cdot kP^{1/4} = \text{constant}$$

Further, a ratio for decreasing loss by an air gap is determined to be $kP^{1/4}$ as similar as that of the case in which the rotating speed becomes kN times. A relationship between an air gap length g and a loss W1 is expressed by the following formula.

$$g/d \propto W1^{-1/2}$$

Therefore, loss W1' when the rotating speed is varied to kP times should be determined by the following formula:

$$W1' = W1/kP^{1/4}.$$

Consequently, the air gap length g should be increased by a ratio of $g/d \propto (1/kP^{1/4})^{-1/2} = kP^{1/8}$.

By uniting the result when the rotating speed becomes kN times and the result when the output becomes kP times, a relational formula of the air gap length g and the inner diameter d of the stator is obtained which follows:

$$g/d \geqq Kg \cdot kN^{5/6} \cdot kP^{1/8}.$$

Wherein Kg represents a constant which is determined based upon a shape and material of a motor.

When it is assumed that a rotating speed of an object motor is N, an output of the motor is P, standard rotating speed is N0, a standard output is P0, the relational formula is expressed as follows.

$$g/d \geqq Kg \cdot (N/N0)^{5/6} \cdot (P/P0)^{1/8}$$

$$= kg \cdot N0^{-5/6} \cdot P0^{-1/8} \cdot N^{5/6} \cdot P^{1/8}.$$

When both the standard rotating speed and the standard output are determined to be 1, $N0^{-5/6} \cdot P0^{-1/8}$ becomes 1, therefore the above formula is expressed as follows:

$$g/d \geqq Kg \cdot N^{5/6} \cdot P^{1/8}.$$

In the foregoing, we described a brushless DC motor which has a normal ratio of a size of a brushless DC motor with respect to a wire diameter of a stator winding. But, when the size of a brushless DC motor is extremely large with respect to the wire diameter of a stator winding, (s/t) cannot be ignored which is included in the above formula expressing an amplitude Bm of $Bm = \beta(s/t)^{1.95}/(g/d)$. Therefore, a metallic tube loss W1 is represented by the following formula.

$$W1 \propto (\gamma/0.3)^{1.95}/(g/d).$$

Wherein $\gamma = s/t$, and 0.3 is a general value of s/t.

And, transforming of formula based upon the above formula representing a metallic tube loss W1 and the above findings is performed and both standard rotating speed N and a standard output P are determined to be 1, the following formula is obtained.

$$g/d \geqq Kg \cdot (\gamma/0.3)^{1.95} \cdot N^{5/6} \cdot P^{1/8}.$$

Brief Description of The Drawings

Figure 1 is a schematic view illustrating a main portion of a super high speed brushless DC motor according to an embodiment of the present invention;

Figure 2 is a diagram illustrating magnetic flux density between a stator and a rotor;

Figure 3(A) is a graph illustrating variation of spacial harmonics relative to air gap length;

Figure 3(B) is a graph illustrating variation of amplitude of spacial harmonics relative to g/d (air gap length/inner diameter of a stator);

Figure 3(C) is a graph illustrating variation of constant $\alpha$ relative to s/t (length of mouth of slot/slot pitch);

Figure 4 is a graph illustrating increase of amplitude of spacial harmonics relative to s/t (length of mouth of slot with respect to slot pitch);

Figure 5 is a schematic view illustrating a main portion of a super high speed brushless DC motor according to another embodiment of the present invention;

Figure 6 is a schematic view illustrating a magnetization direction of a permanent magnet made of rare earth elements;

Figure 7 is a diagram illustrating variation in magnetic flux density;

Figure 8 is a schematic view illustrating a main portion of a super high speed brushless DC motor according to a further embodiment of the present invention; and

Figure 9 is a diagram illustrating a limit for raising rotating speed of conventional brushless DC motors.

Description of the Preferred Embodiments

Hereinafter, referring to the attached drawings, we describe the present invention in detail.

Figure 1 is a schematic view illustrating a main portion of a super high speed brushless DC motor according to an embodiment of the present invention. In the super high speed brushless DC motor, an air gap length g between a stator 1 and a rotor 2 is determined to be equal to or greater than $N^{5/6} \cdot P^{1/8} \cdot d \cdot Kg$. Wherein, d represents an inner diameter of a stator, N represents a rated revolution (ten thousands r.p.m.), P represents a rated output (kW), Kg represents a constant which is determined based upon a stator of a motor. Further, 1a represents a slot, 1b represents a tooth, 1c represents a stator winding, 2a represents a shaft, 2b represents a permanent magnet made of rare earth elements, 2c represents a protection tube made of metal. Of course, at least one pair of permanent magnets 2b are provided having gaps therebetween. But, it is possible that a cylinder shaped permanent magnet made of rare earth elements which magnet is made in one body be employed.

The constant Kg is 1/200 when the inner diameter of the stator 1 is $\phi31$, a slot pitch is 5.4 mm, a length of mouth of the slot is 1.08 mm, and a tube made of stainless steel is employed as the protection tube 2c, for example. When a tube having an electric resistivity of $72 \times 10^{-8} \sim 144 \times 10^{-8}$ $\Omega$m is employed as the outermost portion among a portion having metal-like characteristics instead of the tube made of stainless steel, the constant Kg becomes 1/200. And, when the rated revolution is determined to be 170,000 r.p.m. and the rated output is determined to be 5 kW, the air gap length g is determined to be equal to or greater than 2.01 mm based upon the above formula. When a brushless DC motor in which the air gap length is determined to be equal to or greater than 2.01 mm is actually driven, the brushless DC motor continues rotating stably by the above revolution and the above output. In comparison to conventional brushless DC motors employing stators having the above arrangement in which air gap lengthes are determined to be 0.16 ~ 0.31 mm, the air gap length of this embodiment is greater by one figure.

Figure 2 is a diagram illustrating magnetic flux density between a stator and a rotor. Magnetic flux density on a surface (refer to a dashed line in Fig. 2) of a rotor of a conventional brushless DC motor is the greatest at positions opposing to the teeth 1b and is the smallest at positions opposing to the slots 1a, and the difference between the greatest megnetic flux density and the smallest megnetic flux density is great. In opposition to the above, magnetic flux density on a surface (refer to a solid line in Fig. 2) of a rotor of the brushless DC motor according to this embodiment is greatest at positions opposing the teeth 1b and is the smallest at positions opposing the slots 1a, and the difference between the greatest megnetic flux density and the smallest megnetic flux density is extremely small. The difference between the both magnetic flux densities is an amplitude of spacial harmonics and is coincident with graphs illustrated in Figs. 3(A) and 3(B) which illustrate a decrease of an amplitude of spacial harmonics following increase of air gap length and g/d. The greater the variation of the magnetic flux density on the surface of the rotor 2 is, the greater the generation of eddy current is. Therefore, eddy current generated on a surface of the rotor 2 according to this embodoment is decreased in comparison with conventional brushless DC motor, heat generation caused by eddy current is also decreased. Consequently, a degree of increase of eddy current which rises following an increase of revolution is suppressed even when a super high speed brushless DC motor which is rated for high revolution is employed.

Further, when generation of eddy current is suppressed, heat generation occurs in the rotor 2 caused by the suppressed eddy current. The heat generation becomes a quantity which cannot be ignored. But in this embodiment, the air gap length g is determined so that generation of eddy current is sufficiently suppressed and heat generation caused by eddy current is sufficiently radiated.

Specifically, $N^{5/6}$ is a coefficient for sufficiently decreasing an eddy current loss following an increase in revolution, and $P^{1/8}$ is a coefficient for evading difficulty of heat radiation following an increase in capacity of a brushless DC motor.

When the air gap length is determined to be great as is described above, it may be thought that flux linkages efficiency between the stator 1 and the rotor 2 decreases so as to lower driving efficiency. But, in this embodiment, sufficient flux linkages efficiency is performed because permanent magnets 2b, made of rare earth elements which have great magnetic force (BH product), are employed in the rotor 2.

Therefore, a super high speed brushless DC motor is actualized which was previously thought to be impossible. When a brushless DC motor having a rotating speed which is the same as a conventionally actualized rotating speed is to be obtained, size accuracy, assembling accuracy are not necessarily raised too much, and cost reduction of a brushless DC motor is achieved, because an air gap length can be large.

Further, in this embodiment, a protection tube 2c can be employed which applies an inward compression force to the permanent magnets 2b. In this case, the permanent magnets 2b are securely protected up to a super high rotating speed at which centrifugal stress caused by the rotation of the rotor 2 becomes great, and a thickness of the protection tube 2c can be appropriately determined. In turn, inward comprssion force can be made great, so that this embodiment is suitable for higher rotating speed.

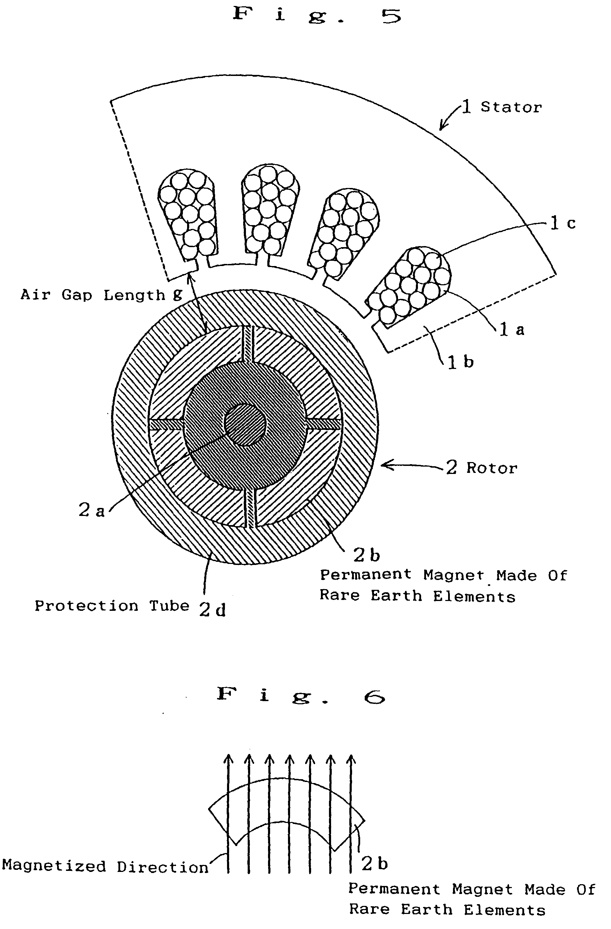

In the foregoing, a brushless DC motor is described of which ratio $\gamma\{= (s/t)\}$ of a length of mouth of slot with respect to a slot pitch of a stator is about 0.3. But, when $\gamma$ has a value substantially different from 0.3, an amplitude Bm of spacial harmonics varies depending upon not only g/d but also $\gamma$, as is illustrated in Fig. 4. In Fig. 4, white circles represent a case in which g/d is determined to be 0.01, black circles represent a case in which g/d is determined to be 0.02, white rectangles represent a case in which g/d is determined to be 0.05, black rectangles represent a case in which g/d is determined to be 0.1, respectively.

Therefore, when a rated revolution and a rated output are determined, a maximum amplitude of spacial harmonics is obtained based upon the rated revolution and the rated output. A brushless DC motor is produced which provides a combination of $\gamma$ and g/d for positioning an amplitude of spacial harmonics in a region (lower region than a dashed line in Fig. 4) in which an amplitude is smaller than the maximum amplitude. That is, the combination can be dealt with by decreasing the value of $\gamma$ or increasing the value of g/d.

When the value of $\gamma$ is decreased, a stator should be manufactured to suit the value of $\gamma$ and a stator winding should be set to all slots. On the contrary, when the value of g/d is increased, only manufacturing a rotor which has no windings to suit the value of g/d is nscessary. Therefore, it is preferable that only g/d be varied without varying the value of $\gamma$ (that is, exchanging only a rotor).

Second Embodiment

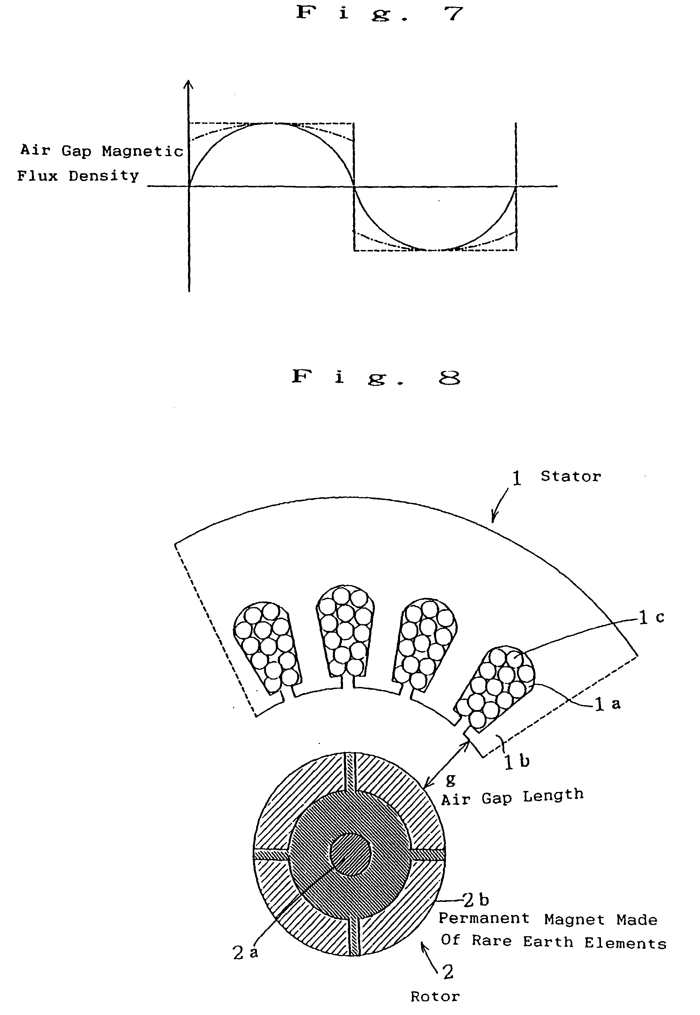

Figure 5 is a schematic view illustrating a main portion of a super high speed brushless DC motor according to another embodiment of the present invention.

This embodiment differs from the embodiment illustrated in Fig. 1 in that a protection tube 2d made of insulation material is employed instead of the protection tube 2c made of metal.

In this embodiment, no eddy current is generated in the protection tube 2d which is different from the embodiment illustrated in Fig. 1. But, eddy current is generated in a portion (rotor core, permanent magnets made of rare earth elements) having metallic characteristics and being positioned within the interior of the protection tube 2d. Therefore, a distance between the tooth 1b of the stator 1 and the surface of the portion having metallic characteristics is determined to be an air gap length.

Consequently, the protection tube 2d made of insuating material such as carbon fiber, ceramics, glass fiber or the like is mounted within the air gap length which is sufficiently great compared to that of a conventional brushless DC motor. The thickness of the protection tube 2d can be determined to be great so as to provide sufficient permanent magnet protection.

On the contrary, in conventional brushless DC motors, an air gap length is about 1/100 ~ 1/200 of an inner diameter of a stator so that a protection tube made of insulating material for performing sufficient permanent magnet protection effect cannot be provided within the gap length.

Further, in this embodiment, it is possible that a protection tube 2c be employed which applies an inward compression force to the permanent magnets 2b. In this case, the permanent magnet 2b, made of rare earth elements, are securely protected up to a super high rotating speed at which centrifugal stress caused by the rotation of the rotor 2 becomes great, and a thickness of the protection tube 2c can be appropriately determined, in turn, inward comprssion force can be supplied, so that this embodiment is suitable for higher rotating speeds.

Third Embodiment

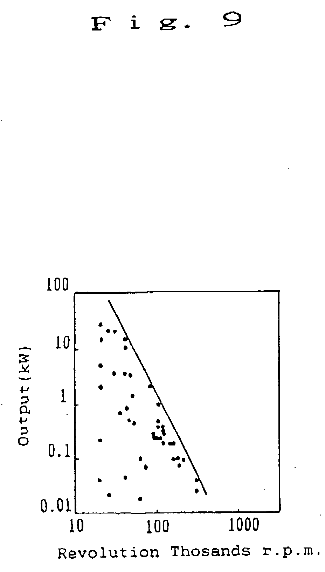

Figure 6 is a schematic view illustrating a magnetization direction of a permanent magnet made of rare earth elements, the permanent magnet being to be mounted to a rotor of a super high speed brushless DC motor according to the present invention.

The permanent magnet 2b is magnetized so that the permanent magnet 2b generates magnet flux which are in parallel to one another.

Therefore, in this embodiment, magnetic flux density becomes greatest value in a condition that the permanent magnet 2b opposes the tooth 1b of the stator 1, while magnetic flux density becomes smallest in a condition when the permanent magnet 2b opposes the slot 1a of the stator 1. In a condition that the permanent magnet 2b opposes neither the tooth 1b nor the slot 1a, a magnetic flux quantity of coupled magnetic flux among the magnetic flux of the permanent magnet 2b which is magnetized in a direction which is in parallel to a magnetic pole axis, with the tooth 1b of the stator 1, varies gradually in correspondence to a shifted angle so that magnetic flux density smoothly varies relative to the shifted angle. Consequently, magnetic flux varies according to sine function and includes almost no harmonics (refer to Fig. 7). When magnetic flux varies according to sine function, generation of iron loss in the stator is significantly suppressed so that a substantial increase in efficiency is achieved. Thus, a super high speed brushless DC motor is actualized.

A rectangular wave illustrated with a dashed line in Fig. 7 illustrates a variation in magnetic flux density when permanent magnets magnetized for generating radial magnetic flux over an entire region are employed. The variation in magnetic flux density includes various harmonics because the variation varies in a rectangular shape. Therefore, iron loss in the stator caused by the harmonics increases so that driving efficiency decreases following in increase in losses.

The waveshape illustrated with a dash and dot line in Fig. 7 illustrates a variation in magnetic flux density when permanent magnets magnetized according to this embodiment wherein an air gap length is equal to that of conventional brushless DC motor. The waveform is nearer to a rectangular wave rather than the sine wave. Therefore, generated iron losses approach iron losses for a case represented by the rectangular waveform.

As is apparent from the foregoing comparisons with comparative examples, iron losses in the stator 1 are decreased by designating a large air gap length, and by employing permanent magnets 2b made of rare earth elements and magnetized over an entire region in directions which are in parallel to one another. In turn, a super high speed brushless DC motor having extremely high efficiency is actualized.

Fourth Embodiment

Figure 8 is a schematic view illustrating a main portion of a super high speed brushless DC motor according to a further embodiment of the present invention.

This embodiment differs from the above embodiments in that a casting hot worked permanent magnet made of rare earth elements is employed as the permanent magnet 2b, and that the protection tube has been omitted.

The casting hot worked permanent magnet made of rare earth elements has not only strong magnetic force, but also strong mechanical strength so that breakage of permanent magnet when a brushless DC motor rotates at a super high speed is prevented, even when no protection tube is employed. Consequently, an arrangement of the rotor 2 and manufacturing operations of the rotor 2 can be simplified.

When a permanent magnet is employed as an example of the casting hot worked permanent magnet made of rare earth elements, which magnet is obtained by employing $Pr17 \cdot Fe76.5 \cdot B5 \cdot Cu1.5$ as a fundamental particle and by applying magnetization after melting and casting processing, hot working heat treatment have been performed, a central value of BH product is 27 MGOe, a bending strength is equal to or greater than 36 kgf/mm$^2$, a tensile strength is equal to or greater than 24 kgf/mm$^2$, and a compressive strength is 95 kgf/mm$^2$. It is understood that the rotor 2 is constituted without employing a protection tube even when the casting hot worked premanent magnet made of rare earth elements is applied to a super high speed brushless DC motor having a revolution which is more than 100,000 revolution per minute.

Fifth Embodiment

When a maximum value of the air gap length g is considered in a brushless DC motor according to the present invention, when magnetic flux from the magnet does not flow in the stator, the motor cannot generate torque. In short, when a distance g from the magnet to the stator is smaller than an interval between magnetic poles (a distance between n-pole and S-pole of the magnet), sufficient flux flows in the stator so that the motor generates torque.

Therefore, a relationship represented by the following formula is effected.

$$gmax < \pi D/(2p)$$

Wherein, gmax represents an upper limit value of an air gap length g, D represents a diameter regulating a surface of magnets of the rotor, p represents a number of poles.

That is, a limit value for operating a motor as a brushless DC motor becomes the upper limit value of the air gap length g.

And, when rated revolution of a brushless DC motor is determined to be 170,000 r.p.m., and rated output of the brushless DC motor is determined to be 5 kW, the air gap length g is determined to be smaller than 15.7 mm based upon the above formula. When a brushless DC motor having the air gap length smaller than 15.7 mm has driven, the brushless DC motor has continued rotating at the above revolution and output.

Sixth Embodiment

A super high speed brushless DC motor according to this embodiment includes fins for natural air-cooling, and has an air gap length g which is determined to be equal to or greater than $N^{5/6} \cdot P^{1/8} \cdot d \cdot Kg/Ks^{1/2}$. Wherein, Ks represents a constant which is determined based upon an increase of surfce area caused by providing fins for natural air-cooling, d represents an inner diameter of a stator, N represents rated revolution (ten thousands r.p.m.), P represents rated output (kW), Kg represents a constant which is determined based upon a stator of a motor.

In the above calculation of the lower limit value of the air gap length g, it is assumed that heat radiating quantity per unit area is constant. But, when fins 2d for natural air-cooling having a very simple arrangement are provided to a brushless DC motor, surface area increases and heat radiating quantity increases. Therefore, in this case, $(\alpha^3 \cdot kN^2)/(Ks \cdot \alpha^2)$ is employed instead of $(\alpha^3 \cdot kN^2)/\alpha^2$ as the relationship of heat generating quantity/heat radiating area. Wherein, Ks has a value which is equal to or more than 1.

In this case, when it is assumed that an air gap length for cooling effect being realized is determined to be g, and that an air gap length for cooling effect being not realized is determined to be g', a formula of $g = g'/Ks^{1/2}$ is obtained. Specifically, when the surface area becomes twice by providing fins for natual air-cooling, heat radiating effect Ks becomes nearly twice when natural air-cooling is effected, so that the air gap length is determined to be equal to or more than 0.707 times the air gap length g' for cooling effect being not realized at a normal temperature.

Further, the present invention is not limited to the above embodiments. It is applicable that material having an electric resistivity which is equal to or less than $144 \times 10^{-8}$ $\Omega$m (may be $3 \times 10^{-8} \sim 144 \times 10^{-8}$ $\Omega$m) is employed as the outermost portion in a portion having metallic characteristics of the rotor 2 in each embodiment. In this case, the constant Kg becomes 1/200. Modifications are possible within the scope of the appended claims.

Possibility For Industrial Utilization

The present invention increases the air gap length between the stator and the portion having metallic characteristics of the rotor so as to obtain a brushless DC motor which is able to rotate at super high speed. The present invention is useful for driving sources of various apparatus which require super high speed rotation.

## Claims

1. A super high speed brushless DC motor comprising;
   an air gap length g between a stator (1) and a portion having metallic characteristics of a rotor (2) which air gap is determined to be equal or greater than $N^{5/6} \cdot P^{1/8} \cdot d \cdot Kg$ {wherein d represents an inner diameter of the stator, N represents a rated speed (ten thousands r.p.m.), P represents a rated output (kW), and Kg represents a constant which is determined based upon the stator of the motor}.

2. A super high speed brushless DC motor comprising;
   an air gap length g between a stator (1) and a portion having metallic characteristics of a rotor (2) which air gap is determined to be equal or more than $(\gamma/0.3)^{1.95} \cdot N^{5/6} \cdot P^{1/8} \cdot d \cdot Kg$ {wherein $\gamma$ represents a ratio of a length of mouth of a slot with respect to a slot pitch of the stator, d represents an inner diameter of the stator, N represents a rated speed (ten thousands r.p.m.), P represents a rated output (kW), and Kg represents a constant which is determined based upon the stator of the motor}.

3. A super high speed brushless DC motor as set forth in claim 1 or claim 2, further comprising fins for cooling, and wherein the air gap length between the stator and the portion of the rotor having metallic characteristics is determined to be $1/Ks^{1/2}$ multiplied to the above-mentioned air gap length g.

4. A super high speed brushless DC motor as set forth in one of claims 1-3, wherein the air gap length g is determined to be less than $\pi D/(2p)$ (wherein D represents a diameter regulating a surface of magnets of the rotor).

5. A super high speed brushless DC motor as set forth in claims 1-4, wherein the rotor (2) includes permanent magnets (2b) made of rare earth elements.

6. A super high speed brushless DC motor as set forth in one of claims 1-5, wherein said permanent magnets (2b) are magnetized over an entire region in a direction parallel to a magnetic pole axis of the permanent magnets (2b).

7. A super high speed brushless DC motor as set forth in one of claims 1-6, wherein a rotor (2) includes a protection tube (2c) made of metal affixed to the outermost portion of said rotor (2).

8. A super high speed brushless DC motor as set forth in one of claims 1-6, wherein said protection tube (2d) is made of insulating material.

9. A super high speed brushless DC motor as set forth in one of calims 1-6, wherein a rotor (2) includes a protection tube (2c)(2d) mounted at outermost portion of said rotor (2), the protection tube (2c)(2d) providing compressing force to the permanent magnets (2b) toward a central axis of the rotor (2).

10. A super high speed brushless DC motor as set forth in one of claims 5-9, wherein said permanent magnets (2b) include magnets made of casting hot worked rare earth elements.

## Patentansprüche

1. Bürstenloser DC-Motor ultrahoher Geschwindigkeit mit:
   einer Luftspaltlänge g zwischen einem Stator (1) und einem Abschnitt mit Metalleigenschaften eines Rotors (2), wobei der Luftspalt so bestimmt ist, daß er gleich oder größer als $N^{5/6} \cdot P^{1/8} \cdot d \cdot Kg$ ist {wobei d einen inneren Durchmesser des Stators darstellt, N eine Nenndrehzahl (Zehntausend Upm) darstellt, P eine Nennleistung (kW) darstellt und Kg eine Konstante darstellt, die auf der Grundlage des Stators des Motors bestimmt ist}.

2. Bürstenloser DC-Motor ultrahoher Geschwindigkeit mit:

einer Luftspaltlänge g zwischen einem Stator (1) und einem Abschnitt mit Metalleigenschaften eines Rotors (2), wobei der Luftspalt so bestimmt ist, daß er gleich oder größer als $(\gamma/0,3)^{1,95} \cdot N^{5/6} \cdot P^{1/8} \cdot d \cdot Kg$ ist {wobei $\gamma$ ein Verhältnis einer Länge einer Öffnung eines Schlitzes in Bezug auf einen Schlitzabstand des Stators darstellt, d einen inneren Durchmesser des Stators darstellt, N eine Nenndrehzahl (Zehntausend Upm) darstellt und Kg eine Konstante darstellt, die auf der Grundlage des Stators des Motors bestimmt ist}.

3. Bürstenloser DC-Motor ultrahoher Geschwindigkeit nach Anspruch 1 oder 2 weiter mit Rippen zum Kühlen, wobei die Luftspaltlänge zwischen dem Stator und dem Abschnitt des Rotors mit Metalleigenschaften so bestimmt ist, daß sie $1/Ks^{1/2}$ multipliziert mit der oben erwähnten Luftspaltlänge g ist.

4. Bürstenloser DC-Motor ultrahoher Geschwindigkeit nach einem der Ansprüche 1 bis 3, bei dem die Luftspaltlänge g so bestimmt ist, daß sie kleiner als $\pi D/(2p)$ ist (wobei D einen Durchmesser darstellt, der eine Oberfläche von Magneten des Rotors regelt).

5. Bürstenloser DC-Motor ultrahoher Geschwindigkeit nach einem der Ansprüche 1 bis 4, bei dem der Rotor (2) Permanentmagnete (2b) aufweist, die aus seltenen Erdmetallen gemacht sind.

6. Bürstenloser DC-Motor ultrahoher Geschwindigkeit nach einem der Ansprüche 1 bis 5, bei dem die Permanentmagneten (2b) über einen gesamten Bereich in einer Richtung parallel zu einer Magnetpolachse der Permanentmagnete (2b) magnetisiert sind.

7. Bürstenloser DC-Motor ultrahoher Geschwindigkeit nach einem der Ansprüche 1 bis 6, bei dem ein Rotor (2) eine Schutzröhre (2c) aufweist, die aus Metall gemacht ist und an dem äußersten Abschnitt des Rotors (2) befestigt ist.

8. Bürstenloser DC-Motor ultrahoher Geschwindigkeit nach einem der Ansprüche 1 bis 6, bei dem die Schutzröhre (2d) aus Isolationsmaterial gemacht ist.

9. Bürstenloser DC-Motor ultrahoher Geschwindigkeit nach einem der Ansprüche 1 bis 6, bei dem ein Rotor (2) eine Schutzröhre (2c) (2d) aufweist, die an einem äußersten Abschnitt des Rotors (2) angebracht ist, wobei die Schutzröhre (2c) (2d) eine Kompressionskraft auf die Permanentmagnete (2b) zu einer Mittelachse des Rotors (2) ausübt.

10. Bürstenloser DC-Motor ultrahoher Geschwindigkeit nach einem der Ansprüche 5 bis 9, bei dem die Permanentmagnete (2b) Magnete aufweisen, die aus genossenen warm umgeformten seltenen Erdmetallen gemacht sind.

## Revendications

1. Moteur sans balai à courant continu à vitesse extrêmement élevée comprenant :
   une longueur d'entrefer d'air g entre un stator (1) et une partie ayant des caractéristiques métalliques d'un rotor (2), lequel entrefer d'air est déterminé comme étant égal ou supérieur à $N^{5/6}.P^{1/8}.d.Kg$ {où d représente un diamètre interne du stator, N représente une vitesse nominale (dix mille tours par minute), P représente une sortie nominale (kW), et Kg représente une constante déterminée sur la base du stator du moteur}.

2. Moteur sans balai à courant continu à vitesse extrêmement élevée comprenant :
   une longueur d'entrefer d'air g entre un stator (1) et une partie ayant des caractéristiques métalliques d'un rotor (2), lequel entrefer d'air est déterminé comme étant égal ou supérieur à $(\gamma/0,3)^{1,95}.N^{5/6}.P^{1/8}.d.Kg$ {où y représente un rapport d'une longueur d'embouchure d'une fente par rapport à un pas de fente du stator, d représente un diamètre interne du stator, N représente une vitesse nominale (dix mille tours par minute), P représente une sortie nominale (kW), et Kg représente une constante déterminée sur la base du stator du moteur}.

3. Moteur sans balai à courant continu à vitesse extrêmement élevée selon la revendication 1 ou la revendication 2, comprenant en outre des ailettes pour le refroidissement, et dans lequel la longueur d'entrefer d'air entre le stator et la partie du rotor ayant des caractéristiques métalliques, est déterminée comme étant de $1/Ks^{1/2}$, multiplié par la longueur d'entrefer d'air g mentionnée ci-dessus.

4. Moteur sans balai à courant continu à vitesse extrêmement élevée selon l'une des revendications 1 à 3, dans lequel la longueur d'entrefer d'air g est déterminée comme étant inférieure à $nD/(2p)$ {où D représente un diamètre régulant une surface des aimants du rotor}.

5. Moteur sans balai à courant continu à vitesse extrêmement élevée selon l'une des revendications 1 à 4, dans lequel le rotor (2) comporte des aimants permanents (2b) faits d'éléments de terres rares.

6. Moteur sans balai à courant continu à vitesse extrêmement élevée selon l'une des revendications 1 à 5, dans lequel lesdits aimants permanents (2b) sont magnétisés sur une région complète dans une direction parallèle à un axe de pôle magnétique des aimants permanents (2b).

7. Moteur sans balai à courant continu à vitesse extrêmement élevée selon l'une des revendications 1 à 6, dans lequel un rotor (2) comporte un tube de protection (2c) en métal fixé à la partie la plus extérieure dudit rotor (2).

8. Moteur sans balai à courant continu à vitesse extrêmement élevée selon l'une des revendications 1 à 6, dans lequel ledit tube de protection (2d) en matériau isolant.

9. Moteur sans balai à courant continu à vitesse extrêmement élevée selon l'une des revendications 1 à 6, dans lequel un rotor (2) comporte un tube de protection (2c)(2d) monté sur la partie la plus extérieure dudit rotor (2), le tube de protection (2c)(2d) fournissant une force de compression aux aimants permanents (2b) vers un axe central du rotor (2).

10. Moteur sans balai à courant continu à vitesse extrêmement élevée selon l'une des revendications 5 à 9, dans lequel lesdits aimants permanents (2b) comportent des aimants faits d'éléments de terres rares travaillés par moulage à chaud.

# Fig. 1

1 Stator

1 c

S  t

1 a

1 b

g
Air Gap Length

2 Rotor

2 a

2 b

Permanent Magnet Made Of
Rare Earth Elements

Protection Tube  2 c

# Fig. 2

Variation In Magnetic Flux Density

Magnetic Flux Density (T)

Slot
Of Stator

Rotor

Position

# Fig. 3

(A)

(B)

(C)

F i g . 4

# Fig. 5

1 Stator

1 c

Air Gap Length g

1 a

1 b

2 Rotor

2 a

2 b
Permanent Magnet Made Of
Rare Earth Elements

Protection Tube 2 d

# Fig. 6

Magnetized Direction

2 b

Permanent Magnet Made Of
Rare Earth Elements

# F i g . 7

Air Gap Magnetic Flux Density

# F i g . 8

1 Stator

1 c

1 a

1 b

g
Air Gap Length

2 b
Permanent Magnet Made
Of Rare Earth Elements

2 a

2
Rotor

# F i g. 9